# EUROPÄISCHE PATENTSCHRIFT

(11) **EP 0 937 380 B1**
(45) Veröffentlichungstag und Bekanntmachung des Hinweises auf die Patenterteilung: **21.11.2001**
(21) Anmeldenummer: 99103158.4
(22) Anmeldetag: 18.02.1999
(51) Int. Cl.: A01D 34/73

(54) **Schneidkopf für Fadenschneider**
Cutting head for a cord type mower
Tête de coupe pour tondeuse à filament

(30) Priorität: 19.02.1998 DE 29802832 U
(43) Veröffentlichungstag der Anmeldung: 25.08.1999
(73) Patentinhaber: MOGATEC Moderne Gartentechnik GmbH & Co, 09427 Ehrenfriedersdorf (DE)
(72) Erfinder: Keil, Georg, 64401 Gross-Bieberau (DE)
(74) Vertreter: Neumann, Steffen

(56) Entgegenhaltungen:
- EP-A- 0 417 966
- EP-A- 0 512 784
- DE-C- 3 922 339
- FR-A- 2 646 988
- US-A- 4 366 622

## Beschreibung

Die Erfindung betrifft einen Schneidkopf für Fadenschneider mit einer selbsttätigen, in Abhängigkeit der Fliehkraft wirkenden Fadennachstellung, bestehend aus einem Gehäuse und einer im Gehäuse um eine Achse drehbar gelagerten Fadenspule, die während Normalbetrieb mittels eines am Gehäuse und an der Spule abgestützten Schwenkhebels derart miteinander verbunden sind, daß sie in zueinander gleichbleibender Relativlage rotieren, wobei der Schwenkhebel bei veränderten Fliehkraftverhältnissen infolge Fadenverschleiß ausgelenkt wird und die Verbindung von Gehäuse und Spule löst, so daß durch Änderung der Relativlage zwischen diesen Bauteilen eine Fadennachstellung auftritt, in deren Folge sich die Fliehkraftverhältnisse derart ändern, daß der Schwenkhebel in eine Arretierlage eingelenkt wird und Gehäuse und Spule wieder in zueinander gleichbleibender Relativlage rotieren.

In der Landschafts- und Gartenpflege werden zunehmend sogenannte Rasentrimmer verwendet, um insbesondere Pflanzen an Standorten schneiden zu können, die mit konventionellen Mähern schlecht zugänglich sind. Derartige Geräte weisen mindestens einen Faden auf, der mit hoher Drehzahl um eine Achse rotiert. Für die Funktionsfähigkeit dieser Fadenschneider ist es wesentlich, daß der beim Schneiden auftretende Fadenverschleiß kompensiert wird. Hierbei muß der Faden, der vorzugsweise auf einer in Achsrichtung gelagerten Rolle auf Vorrat gehalten wird, in der jeweils notwendigen Schneidelänge bereitgestellt werden. Diese Bereitstellung kann in verschiedenartiger Weise realisiert werden, wobei sich in der praktischen Handhabung eine fliehkraftabhängige Nachstellung der Fadenlänge bewährt hat.

Das grundlegende Prinzip einer selbsttätigen, in Abhängigkeit der auftretenden Fliehkräfte wirkenden Fadennachstellung wird in der US-Patentschrift 4 104 796 beschrieben. Dieser Fadenschneider umfaßt mindestens eine Fadenspule, die in einem rotierenden Gehäuse angeordnet ist. Über eine Öffnung im Gehäuse wird der Faden in die Arbeitsstellung gebracht. Im Normalbetrieb ist die Spule innerhalb des Gehäuses drehfest arretiert. Demzufolge rotieren Gehäuse und Spule mit identischer Drehzahl, also mit gleichbleibender relativer Lage zueinander. Sofern die Fadenlänge außerhalb des Gehäuses infolge Verschleiß oder Fadenbruch geringer wird, verändert sich die Masse des Fadens und somit ergibt sich eine Verminderung der Last, in deren Folge sich die Drehzahl erhöht. Dadurch wird eine Auslenkung federbelasteter Sperrelemente bewirkt, mittels derer die Arretierung der Spule innerhalb des Gehäuses aufgehoben wird. Folglich ändert sich die Relativlage zwischen Gehäuse und Spule, so daß der Faden nachgestellt wird. Durch diese Nachstellung wird die Fadenlänge außerhalb des Gehäuses wieder größer, was wiederum eine Veränderung des Kräfteverhältnisses innerhalb des rotierenden Systems ergibt. Dadurch schwenken die Sperrelemente erneut in die Arretierlage und Gehäuse und Spule rotieren wieder mit zueinander gleichbleibender Relativlage.

Ausgestaltungen der Lösung gemäß US 4 104 796 umfassen bis zu vier Spulen, so daß bis zu vier Schneidfäden eingesetzt werden können. Derartig aufwendige Konstruktionen konnten sich in der Praxis jedoch nicht durchsetzen. Allerdings erfordert diese Fadennachstellung auch bereits bei lediglich ein oder zwei Fadenspulen eine sehr exakte Abstimmung der verwendeten Federelemente, um die Funktionsfähigkeit zu gewährleisten. Ein weiterer Nachteil dieser Lösung ist der hohe Montageaufwand infolge der zahlreichen Einzelteile.

Ein Fadenschneider mit fliehkraftabhängiger Fadennachstellung ist ebenfalls Gegenstand von EP 0 417 966 B 1. Diese Vorrichtung weist einen Schneidkopf mit Gehäuse und Fadenspule auf, wobei auch hier die Fliehkraft genutzt wird, um die Relativlage zwischen Gehäuse und Spule derart zu ändern, daß sich eine Fadennachstellung ergibt. Im Gegensatz zur US-Patentschrift 4 104 796 sind hierfür jedoch keine federbelasteten Sperrelemente vorgesehen, sondern die Arretierung der Spule innerhalb des Gehäuses wird durch Auslenkung eines, als Ausgleichsstange bezeichneten Schwenkhebels aufgehoben. Die größer werdende Fadenlänge außerhalb des Gehäuses ergibt wieder eine Veränderung des Kräfteverhältnisses innerhalb des rotierenden Systems, so daß die Ausgleichsstange erneut in eine Arretierlage schwenkt und Gehäuse und Spule wieder mit zueinander gleichbleibender Relativlage rotieren.

Die Vorrichtung zum Schneiden von Pflanzen gemäß EP 0 417 966 B 1 gewährleistet eine genaue fliehkraftabhängige Fadennachstellung. Allerdings weist auch diese Lösung mehrere Nachteile auf: Für die Funktionsfähigkeit werden zahlreiche Einzelteile benötigt, die einen erheblichen Montageaufwand bedingen. Außerdem haben die einzelnen Bauteile überwiegend eine komplizierte geometrische Kontur, so daß sich hohe Herstellungskosten ergeben. Diese stark zerklüfteten Konturen sind weiterhin sehr anfällig gegen Verschmutzungen, die sich beim üblichen robusten Einsatz von Fadenschneidern jedoch nicht vermeiden lassen. Ferner ist diese technische Lösung ohnehin nur für Geräte mit lediglich einem Faden geeignet.

Gegenstand der vorliegenden Erfindung ist ein Schneidkopf für einen Fadenschneider des obigen Typs, bei dem mit lediglich einem zusätzlichen Bauteil und nur geringfügigen Modifikationen an Gehäuse und Spule eine selbsttätige Fadennachstellung durch Veränderung der relativen Lage zwischen Gehäuse und Spule erreicht wird. Die zu schaffende Lösung soll einfache geometrische Konturen aufweisen und sowohl für Fadenschneider mit Einfadentechnik als auch für solche mit Zweifadentechnik geeignet sein.

Erfindungsgemäß wird dies durch die Merkmale gemäß Patentanspruch 1 erreicht.

Die Erfindung ergibt eine vorteilhafte Verminderung der Herstellungs- und Montagekosten, weil nur wenige Einzelteile mit ohnehin einfachem konstruktiven Aufbau benötigt werden. Die einfachen geometrischen Konturen der Einzelteile ergeben weiterhin eine wesentliche Verbesserung der Funktionssicherheit, weil Ausfälle infolge Verschmutzung nahezu ausgeschlossen sind.

Vorteilhafte Ausgestaltungen sind Gegenstand der Patentansprüche 2 bis 4.
Durch die Merkmale des Patentanspruchs 2 wird ein sanfter Abbau der auf die Regelelemente wirkenden Kräfte erreicht und gleichzeitig eine Anpassung auf verschiedene Baugrößen mit jeweils unterschiedlichen Fadenlängen. Patentanspruch 3 trägt ebenfalls zu einem sanften Abbau der angreifenden Rotationskräfte sowie zur Verminderung der Reibungskräfte zwischen den Regelelementen bei. Schließlich kann durch Patentanspruch 4 der verfügbare Bauraum optimal genutzt werden.

Ein Ausführungsbeispiel der Erfindung ist in der Zeichnung dargestellt und wird nachfolgend beschrieben. Es zeigen:
- Fig. 1: den grundsätzlichen Aufbau eines erfindungsgemäßen Schneidkopfes für Fadenschneider in Seitenansicht
- Fig. 2: eine Schnittdarstellung entlang der Linie A-A gemäß Fig. 1 in Arretierlage
- Fig. 3: eine ähnliche Schnittdarstellung wie Fig. 2, jedoch zu Beginn der Fadennachstellung
- Fig. 4: eine weitere Schnittdarstellung wie in Fig. 2 und 3, jedoch kurz vor Abschluß der Fadennachstellung

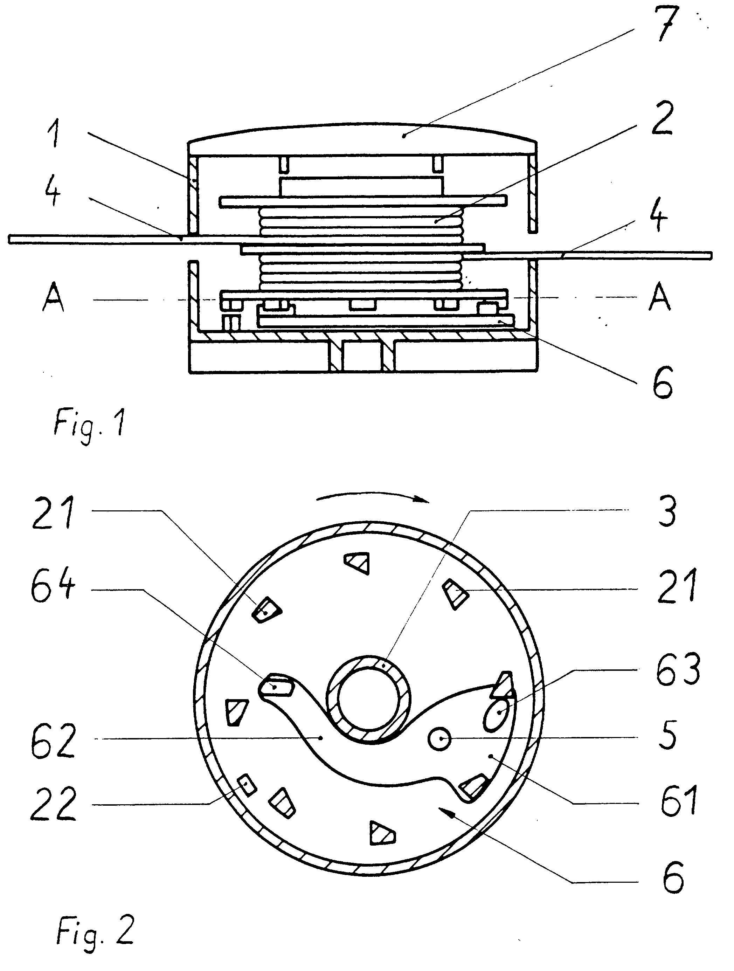

Der in den Figuren 1 und 2 dargestellte Schneidkopf für einen Fadenschneider besteht aus einem Gehäuse 1 und einer im Gehäuse 1 angeordneten Spule 2 mit dem Fadenvorrat. Die Spule 2 ist auf einer Achse 3 drehbar gelagert. Über Öffnungen im Gehäuse 1 werden die Schneidfäden 4 in Arbeitsstellung gebracht. An der Innenseite des Gehäuses 1 ist auf einem zylindrischen Zapfen 5 ein Schwenkhebel 6 befestigt. Das Gehäuse 1 ist mit einem Deckel 7 verschlossen, der gleichzeitig einen axialen Anschlag für die Spule 2 gewährleistet.

Der Schwenkhebel 6 weist gemäß Fig. 2 einen kurzen Hebelarm 61 und einen langen Hebelarm 62 auf. Die Kontur des langen Hebelarmes 62 ist im Bereich der zur Achse 3 liegenden Seite kongruent zur Kontur dieser Achse. An beiden Hebelarmen 61 und 62 ist jeweils ein Vorsprung 63 bzw. 64 ausgestaltet. Weitere Vorsprünge 21 und 22 sind an der zugeordneten Stirnseite der Spule 2 vorgesehen. Die Vorsprünge 21 und 22 sowie 63 und 64 haben jeweils eine solche Höhe und geometrische Kontur, daß sie in Einbaulage miteinander in Wirkverbindung gebracht werden können. Hierbei ist der auf dem kurzen Hebelarm 61 angeordnete Vorsprung 63 als Sperrelement ausgestaltet. Diesem Sperrelement 63 wird in Arretierlage ein als Arretierstift wirkender Vorsprung 21 der Spule 2 zugeordnet. Hingegen ist der auf dem langen Hebelarm 62 angeordnete Vorsprung 64 als Schaltelement ausgestaltet. Das Schaltelement 64 wird von den auf der Spule 2 vorgesehenen Vorsprüngen 21 und 22 betätigt und kann je nach Stellung sowohl von einem Anschlagstift 22 als auch von einem Arretierstift 21 beaufschlagt werden.
Die Arretierstifte 21 haben an ihrer zur Achse 3 gerichteten Seite eine schräg verlaufende Kontur, wobei die in Drehrichtung vordere Kante breiter ist als die in Drehrichtung hintere Kante der Arretierstifte 21. Im gezeigten Ausführungsbeispiel sind insgesamt acht Arretierstifte 21 dargestellt. Diese Anzahl kann je nach Konstruktionsbedingungen verändert werden, wobei die Arretierstifte 21 unabhängig von ihrer konkreten Anzahl entlang einer fiktiven Kreislinie angeordnet sind. Außerhalb dieser fiktiven Kreislinie sind auf einer weiteren, ebenfalls fiktiven Kreislinie Anschlagstifte 22 angeordnet. In der Zeichnung wird aus Gründen der Übersichtlichkeit lediglich ein solcher Anschlagstift 22 gezeigt. Es ist jedoch zweckmäßig, daß stets eine gleiche Anzahl von "n" Arretierstiften 21 und "n" Anschlagstiften 22 vorgesehen wird, die in Umfangsrichtung abwechselnd angeordnet sind.

Für die Erläuterung der Funktionsweise wird darauf hingewiesen, daß gemäß Fig. 2 bis 4 die Drehung in Uhrzeigerrichtung erfolgt. Es wird davon ausgegangen, daß der Fadenschneider zunächst mit dem größtmöglichen Schnittkreis betrieben wird, den die beiden Schneidfäden 4 bilden. Durch die Drehung des Schneidkopfes wirken Fliehkräfte auf die beiden Schneidfäden 4, die wiederum auf die Spule 2 radiale Kräfte ausüben. Bei der Darstellung gemäß Fig. 2 handelt es sich um die Stellung im Normalbetrieb, bei dem Gehäuse 1 und Spule 2 in zueinander gleichbleibender Relativlage rotieren. Hierbei bilden ein Sperrelement 63 des Schwenkhebels 6 und ein Arretierstift 21 der Spule 2 einen Anschlag, der verhindert, daß sich die Spule 2 mit dem Fadenvorrat aufrollt.

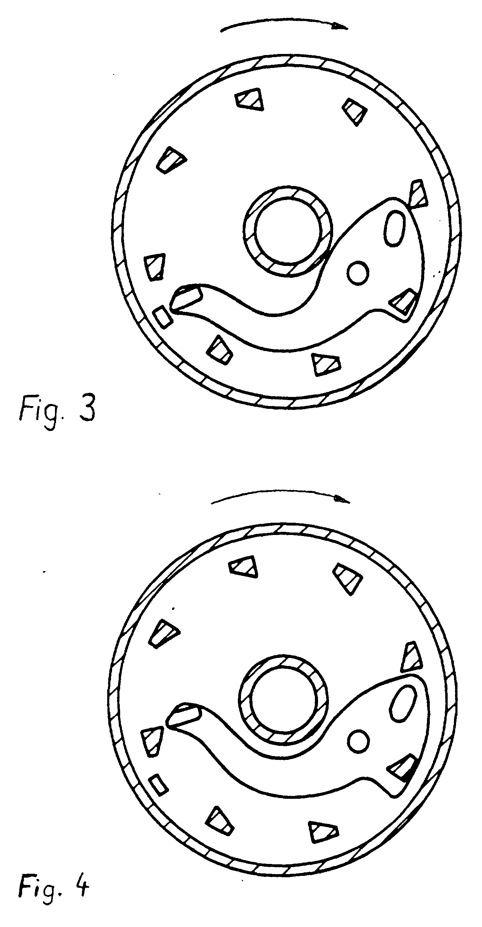

Die durch das Mähen der Pflanzenteile sich verkürzenden Schneidfäden 4 führen, bedingt durch den geringer werdenden Luftwiderstand, zu einer größeren Drehzahl des Schneidkopfes. Die größere Drehzahl bewirkt nun, daß sich der längere Hebelarm 62 mit dem Schaltelement 64 nach außen und der kleinere Hebelarm 61 mit dem Sperrelement 63 nach innen bewegt. Diese Bewegung geht soweit, bis das Sperrelement 63 keinen Anschlag mehr mit dem Arretierstift 21 bildet. Nunmehr bewirken die Fliehkräfte der Schneidfäden 4 eine Drehung der Spule 2 und somit eine Fadennachstellung. Die Spule 2 trifft nachfolgend zunächst mit einem Anschlagstift 22 auf das Schaltelement 64 des Schwenkhebels 6 und begrenzt folglich dessen maximale Auslenkung. Diese Stellung ist aus Fig. 3 ersichtlich. Bei weiterer Drehung gleitet ein Arretierstift 21 auf das Schaltelement 64 des Schwenkhebels 6 und stellt ihn so in seine ursprüngliche Position zurück, daß er erneut mit seinem Sperrelement 63 und dem nunmehr nächsten Arretierstift 21 der Spule 2 einen Anschlag bilden kann. Fig. 4 zeigt die Stellung unmittelbar vor der erneuten Arretierlage. Die bei der Lageveränderung entstehende Rotationsenergie der Spule 2 wird durch das Schaltelement 64 stark abgebremst. Das Sperrelement 63 muß daher nur noch wenig Rotationsenergie kompensieren, wodurch sich eine wesentliche Erhöhung der Lebensdauer ergibt.

Durch die erfolgte Verlängerung der Schneidfäden 4 vermindert sich die Drehzahl und der Schwenkhebel 6 befindet sich wieder im Gleichgewicht. Die Spule 2 und das Gehäuse 1 rotieren wieder in zueinander gleichbleibender Relativlage. Diese Relativlage wird erst verändert, wenn aufgrund erneuter Verkürzung der Schneidfäden 4 die Drehzahl wieder so ansteigt, daß die selbsttätige Fadennachstellung von neuem beginnt.

### Bezugszeichenliste

- 1: Gehäuse
- 2: Spule
- 21: Arretierstift
- 22: Anschlagstift
- 3: Achse
- 4: Schneidfäden
- 5: Zapfen
- 6: Schwenkhebel
- 61: kurzer Hebelarm
- 62: langer Hebelarm
- 63: Sperrelement
- 64: Schaltelement
- 7: Deckel

## Patentansprüche

1. Schneidkopf für Fadenschneider mit einer selbsttätigen, in Abhängigkeit der Fliehkraft wirkenden Fadennachstellung, bestehend aus einem Gehäuse (1) und einer im Gehäuse um eine Achse (3) drehbar gelagerten Fadenspule (2), die während Normalbetrieb mittels eines am Gehäuse (1) und an der Spule (2) abgestützten Schwenkhebels (6) derart miteinander verbunden sind, daß sie in zueinander gleichbleibender Relativlage rotieren, wobei der Schwenkhebel (6) bei veränderten Fliehkraftverhältnissen infolge Fadenverschleiß ausgelenkt wird und die Verbindung von Gehäuse (1) und Spule (2) löst, so daß durch Änderung der Relativlage zwischen diesen Bauteilen eine Fadennachstellung auftritt, in deren Folge sich die Fliehkraftverhältnisse derart ändern, daß der Schwenkhebel (6) in eine Arretierlage eingelenkt wird und Gehäuse (1) und Spule (2) wieder in zueinander gleichbleibender Relativlage rotieren,
**dadurch gekennzeichnet,**
**daß** der Schwenkhebel (6) über einen zylindrischen Zapfen (5) an der Innenseite des Gehäuses (1) befestigt ist und einen kurzen Hebelarm (61) und einen langen Hebelarm (62) aufweist, an denen jeweils ein Vorsprung (63; 64) ausgestaltet ist, der eine solche Höhe und geometrische Kontur aufweist, daß er in Einbaulage mit an der zugeordneten Seite der Spule (2) angeordneten Vorsprüngen (21; 22) in Wirkverbindung bringbar ist, wobei der auf dem kurzen Hebelarm (61) angeordnete Vorsprung (63) als Sperrelement ausgestaltet ist, dem in Arretierlage ein auf der Spule (2) angeordneter Arretierstift (21) zugeordnet ist, während der auf dem langen Hebelarm (62) angeordnete Vorsprung (64) als Schaltelement ausgestaltet ist, das sowohl von einem Anschlagstift (22) als auch von einem Arretierstift (21) beaufschlagbar ist.

2. Schneidkopf für Fadenschneider nach Anspruch 1,
**dadurch gekennzeichnet,**
**daß** auf der, dem Schwenkhebel (6) zugeordneten Stirnseite der Spule (2) entlang einer fiktiven Kreislinie insgesamt "n" Arretierstifte (21) und auf einer weiteren fiktiven, jedoch außerhalb der Kreislinie mit den Arretierstiften (21) verlaufenden Kreislinie insgesamt "n" Anschlagstifte (22) angeordnet sind, wobei in Umfangsrichtung jeweils abwechselnd ein Arretierstift (21) und ein Anschlagstift (22) vorgesehen sind.

3. Schneidkopf für Fadenschneider nach Anspruch 1,
**dadurch gekennzeichnet, daß** die Arretierstifte (21) an ihrer zur Achse (3) gerichteten Innenseite eine schräg verlaufende Kontur aufweisen, wobei die in Drehrichtung vordere Kante breiter ist als die in Drehrichtung hintere Kante der Arretierstifte (21).

4. Schneidkopf für Fadenschneider nach Anspruch 1,
**dadurch gekennzeichnet,**
**daß** der Schwenkhebel (6) an seinem langen Hebelarm (62) im Bereich der zur Achse (3) liegenden Seite eine zu dieser Achse (3) kongruente Kontur aufweist.

## Claims

1. Cutting head for lawn trimmers with an automatic line feed that functions in dependence on the centrifugal force, consisting of a housing (1) and a spool (2) that is arranged in the housing such that is able to rotate about an axis (3), wherein the housing (1) and the spool are, in the normal mode, connected to one another by means of a pivoted lever (6) supported on the housing (1) and the spool (2), namely in such a way that they rotate in a constant position relative to one another, wherein the pivoted lever (6) is subjected to an excursion when the centrifugal force changes due to line wear and separates the connection between the housing (1) and the spool (2) such that a line feed takes place due to the change in the relative position between these two components, and wherein the line feed causes the centrifugal force to change such that the pivoted lever (6) is moved into a locked position and the housing (1) and the spool (2) once again rotate in a constant position relative to one another,
**characterized by** the fact
that the pivoted lever (6) is mounted above a cylindrical pin (5) on the inner side of the housing (1) and contains a short lever arm (61) and a long lever arm (62), on which one respective projection (63; 64) is arranged, wherein said projection has such a height and geometric contour that it can be functionally engaged with projections (21; 22) arranged on the assigned side of the spool (2) in the installed condition, wherein the projection (63) arranged on the short lever arm (61) is realized in the form of a locking element, to which a locking pin (21) arranged on the spool (2) is assigned in the locked position, and wherein the projection (64) arranged on the long lever arm (62) is realized in the form of a switching element that can be acted upon by a contact pin (22), as well as a locking pin (21).

2. Cutting head for lawn trimmers according to Claim 1,
**characterized by** the fact
that a total of "n" locking pins (21) are arranged along a fictitious circle on the end face of the spool (2) that is assigned to the pivoted lever (6), and by the fact that a total of "n" contact pins (22) are arranged on another fictitious circle that, however, extends outside of the circle containing the locking pins (21), wherein one respective locking pin (21) and one respective contact pin (22) are alternately arranged in the circumferential direction.

3. Cutting head for lawn trimmers according to Claim 1, **characterized by** the fact
that the locking pins (21) have an obliquely extending contour on their inner side that is directed toward the axis (3), wherein the front edge of the locking pins (21) viewed in the rotating direction is wider than the rear edge of the locking pins viewed in the rotating direction.

4. Cutting head for lawn trimmers according to Claim 1,
**characterized by** the fact
that the side of the long lever arm (62) of the pivoted lever (6) which faces the axis (3) has a contour that is congruent to this axis (3).

## Revendications

1. Tête de coupe pour rotofil avec un système de réglage du fil autonome, fonctionnant d'après la force centrifuge, consistant en un boîtier (1) et en une bobine de fil (2) pouvant tourner autour d'un axe (3) placée dans le boîtier, qui, pendant le fonctionnement normal sont reliés au moyen d'un levier basculant (6) adapté au boîtier (1) et à la bobine (2), de manière à pouvoir pivoter l'un par rapport à l'autre en position relative toujours constante, le levier basculant (6) étant dévié, en cas de modification des conditions de force centrifuge, du fait de l'usure du fil et interrompant la liaison entre le boîtier (1) et la bobine (2) de sorte que, par la modification de la position relative de ces composantes, un réglage du fil intervient, suite auquel les conditions de force centrifuge changent de telle manière que le levier basculant (6) est enclenché en position d'arrêt et que le boîtier (1) et la bobine (2) tournent de nouveau en position relative constante,
**caractérisé en ce que**
le levier basculant (6) est fixé par un tourillon cylindrique (5) sur la face interne du boîtier (1) et présente un bras de levier court (61) et un bras de levier long (62), chacun des deux comportant une avancée (63 ; 64) qui présente une hauteur et un contour géométrique tels qu'il peut être amené, une fois monté, à fonctionner en liaison avec les avancées (21 ; 22) situées sur le côté correspondant de la bobine (2), l'avancée (63) située sur le bras de levier court (61) formant un élément de barrage auquel s'associe le taquet d'arrêt (21) situé sur la bobine (2), alors que l'avancée (64) située sur le bras de levier long (62) est conçue comme un élément de commutation qui peut être sollicité aussi bien par un taquet de butée (22) que par un taquet d'arrêt (21).

2. Tête de coupe pour rotofil selon la revendication 1,
**caractérisée en ce que**
sur la face frontale du côté du levier basculant (6) de la bobine (2), le long d'une ligne circulaire fictive se situent au total « n » taquets d'arrêt (21) et, sur une autre ligne circulaire fictive, à l'extérieur de la ligne circulaire comportant les taquets d'arrêt (21), se situent au total « n » taquets d'arrêt (22), un taquet d'arrêt et un taquet de butée (22) étant chaque fois prévus alternativement dans le sens du volume.

3. Tête de coupe pour rotofil selon la revendication 1,
**caractérisée en ce que**
les taquets d'arrêt (21) présentent un contour en biais sur leur face interne orientée vers l'axe (3), l'arête avant dans le sens de rotation étant plus large que l'arête arrière des taquets d'arrêt (21) dans le sens de rotation.

4. Tête de coupe pour rotofil selon la revendication 1,
**caractérisée en ce que**
le levier basculant (6) présente, sur son bras de levier long (62) dans la zone du côté de l'axe (3), un contour coïncidant avec cet axe (3).
